# EUROPEAN PATENT SPECIFICATION

(11) **EP 0 833 513 B1**
(45) Date of publication and mention of the grant of the patent: **26.08.2009**
(21) Application number: 97307534.4
(22) Date of filing: 25.09.1997
(51) Int. Cl.: H04N 7/173

(54) **Digital information display apparatus and methods**
Digitales Informationsanzeigegerät und -verfahren
Dispositif et méthodes d'affichage numérique d'information

(30) Priority: 26.09.1996 GB 9620247
(43) Date of publication of application: 01.04.1998
(73) Proprietor: Sony Computer Entertainment UK Limited, London W1R 6LU (GB)
(72) Inventor: Harrison, Philip R., London W1R 6LU (GB)
(74) Representative: Raynor, Simon Mark

(56) References cited:
- WO-A-95/28060
- WO-A-96/17475
- US-A- 5 181 107
- US-A- 5 251 909

## Description

This invention relates to digital information display apparatus and methods, for example to video game consoles adapted for playing games held in digital form on a compact disc (CD) and displayed on a TV receiver or video monitor. The Sony PLAYSTATION (Trade Mark) is currently a best-selling CD-based video game system.

A disadvantage of this system is that the compact discs holding the game software are primarily sold through traditional retail or mail order channels which are fairly slow and expensive and tend to give the potential purchaser little opportunity to assess whether or not they will enjoy a new game before paying the full price up-front for the CD. In principle, this disadvantage applies to any set of digital information sold on a data carrier for unrestricted use by a purchaser.

Further systems for providing digital game data to subscribers are disclosed in International Patent publications Nos. WO96/17475A and WO95/28060A and United States Patents Nos. US-A-5251909 and US-A-5181107.

WO96/17475A describes a system in which encrypted game data is held on a central national server. The encrypted game data is downloaded in encrypted form to a subscriber game adapter on request. In order to prevent unauthorised access to the game data the downloaded encrypted game data must be decrypted by the game adapter before it can be used by a game console to play a game.

US 5251909 describes a system in which game data is distributed to users by transmitting the game data from a central store or periodically sending game data to users on a compact disc. It is suggested that the distributed game data should be encrypted to prevent unauthorised use. In order to allow the user to select a game, the video game player receiving the transmission or holding the compact disc displays a menu identifying games being transmitted or held on the compact disc which are available to be played.

WO95/28060A describes an interactive shopping or game system in which long term data is held locally be a subscriber on a CD-Rom while other data is supplied to this subscriber from a central server through a communications link. It is not suggested that the information carried on the CD-Rom should be encoded or protected in any way.

US-A-5181107 described a system allowing video games to be distributed by a service provider. When a subscriber wishes to play a video game on their computer, the subscriber computer contacts the central service provider. If the required game software is already held in the subscriber computer the central service provider transmits an authorisation code enabling execution of the game software so that the game can be played. Alternatively, if the game software is not held in the subscriber computer the central service provider downloads the game software into the subscriber computer together with any necessary authorisation code.

An object of the invention is to provide apparatus and method making it possible for a user to pay in accordance with their actual usage of the digital information held on a data carrier.

In relation to video games, a particular object of the invention is to provide a pay-per-play apparatus and method. Thus, if the user is highly pleased with a new game, they would be prepared to pay a significant amount for repeat play sessions, whereas if they are displeased they would pay relatively very little, for example for a single short time period sample or preview usage.

A further object is to provide apparatus and methods permitting greater flexibility in the release, availability and pricing structure for sets of digital information, for example video games and other entertainment software.

According to the present invention, there is provided digital information display apparatus as defined by the claims.

Preferably, the invention provides digital information display apparatus wherein;
said means for displaying is digital video display means
adapted to receive digital information and display an image represented by such digital information; and
said access means is further adapted to monitor selected usage.

In a further aspect, the invention provides a method of controlling the decoding and display of information, as defined by the claims.

The term "encoded" is used herein to include only arrangements whereby the digital information on the data carrier cannot be downloaded for display in an intelligible manner without the release signal. For example, the digital information on the data carrier may be encrypted with the release signal providing a key for decryption, or it may be deficient in certain aspects with the release signal providing data to make good the deficiency.

The data carrier preferably carries no humanly-readable, for example printed, information regarding its detailed data content.

The menu signal may itself be encoded, for example encrypted, for decoding by the conditional access means.

It will be appreciated that the invention permits establishment of a video game pay-per-play system without the need for a broadband communications channel. This is because the data embodying the game content itself is wholly or substantially wholly resident on the data carrier, for example a CD, which is physically present on site within the control console.

The communications channel therefore merely requires sufficient bandwidth to carry the menu signal and optionally also decoding data and payment data signals.

The digital video display means and the conditional access means can comprise a conventional pay TV receiver as presently available for connection to Cable or Satellite communications channels, with the conditional access means adapted to further interface with the video game control console. The decoding data and payment data signals for such pay TV receivers can be provided on-line through the communications channel, for example by polling subscribers' equipment via modem, or by telephone line, or by smart card, or other means suited to the circumstances. The smart cards can be of the pre-paid type, for example to enable the conditional access means for a month, or adapted to accrue charging for invoicing purposes. The invention is thus adapted to interface efficiently with existing apparatus, communications infrastructure, encryption and payment systems.

An embodiment of the invention will now be described, by way of example, with reference to the accompanying Drawings, in which:-
Figure 1 is a block diagram of a digital information display apparatus according to the invention, and
Figure 2 is a flow diagram of steps of a method according to the invention.

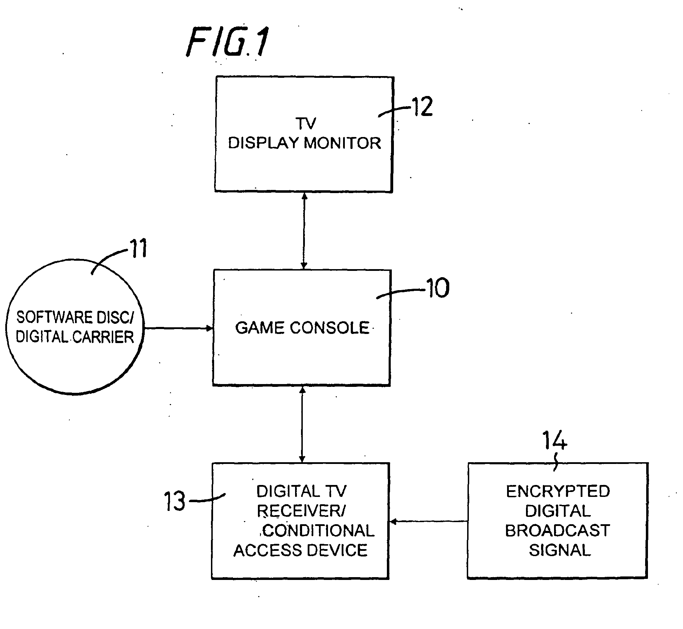

With reference to Figure 1 there is shown a control console exemplified as a video game console 10 adapted to accept data carriers in the form of a compact disc 11 and to selectively download the encoded digital information from the disc in response to a release signal. A video display means is provided in the form of a TV display monitor 12. A digital TV receiver and conditional access means 13 is connected by data bus lines of appropriate capacity to the console 10 and to the monitor 12. An external communications channel 14 is also connected to the access means 13. The channel 14 may be a cable or satellite TV communications link. A telephone line (not shown) may also be connected by modem to the access means 13.

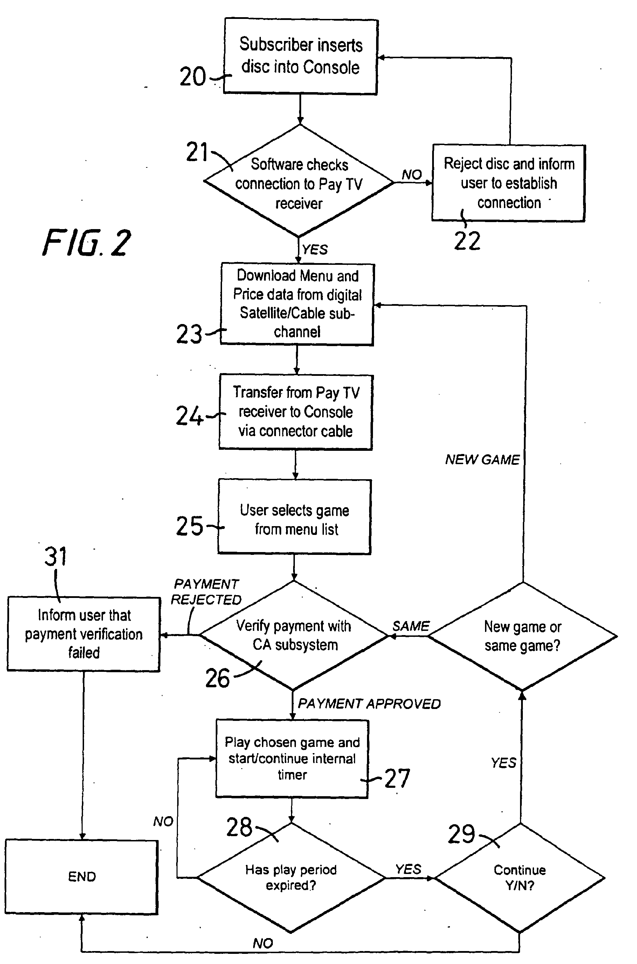

Operation of the apparatus of Figure 1 is suitably described with reference to the flow diagram of Figure 2. The description will refer for convenience to selection and usage of video games, but the invention is applicable to any set of digital information provided on a data carrier.

The video game user connects and switches on the apparatus shown in Figure 1. They are also a subscriber to the satellite or cable pay TV organization and will thus have established credit. The facts of subscription and credit can for example be established by smart card, which is inserted into and read by the access means 13 to enable the apparatus for use. Within their subscription, the user includes a subscription to a predetermined broadcast channel or sub-channel associated with a particular supplier of video games.

In association with the video game channel subscription, the user receives a compact disc 11. For a regular basis, for example once a month, with a subscriber magazine. Each compact disc holds the software for at least one video game, preferably upto about ten. The subscriber can thus collect a library with a large choice of games. The software to play a video game - generally 10-100 Mb or more - is thus physically present locally at the video game console, thereby rendering it unnecessary to utilize a broad band communications channel.

The compact discs hold the video game software in encoded form. As stated above, the term "encoded" is used herein to include only arrangements whereby the digital information on the data carrier cannot be downloaded for display in an intelligible manner without the release signal. The compact discs also preferably carry no humanly-readable information regarding their detailed data content, but perhaps merely a printed statement that it is "SONY Game Disc No. 15 of July 1996", for example.

The user/subscriber has thus received an encoded compact disc, inserted it into the console 10, and tuned their receiver 13 to the relevant channel as shown by step 20 in Figure 2. The receiver software checks conection of the apparatus at steps 21 and 22. The access means thereby receives a menu signal from the channel to which the receiver is tuned, and downloads the menu and transfers it to the console at steps 23 and 24. The control console generates a digital video signal representative of the menu and transmits it to the monitor 12 for display. Alternatively, the menu signal can pass directly from the access means to the monitor for display.

The menu signal is generated, stored and broadcast by a central server at the remote terminal of the communications channel 14. The menu signal provides data relating to the encoded digital video game information on the subscriber's compact discs. The displayed menu tells the user/viewer what games are currently available and their price, for example per play session or per unit time. The control software for the menu causes the displayed menu to list games and prices, if any, available currently from the compact disc currently inserted in the control console, and preferably also includes catalogue listings for games and prices available on previously-issued game discs.

It will be appreciated that the menu signal from the central server can be changed at any time, for example on a daily basis. Because it is downloaded dynamically at the start of a session, at steps 23 and 24 in Figure 2, this allows the menu to reveal new games from time to time to keep the list fresh and exciting. For example, if a new CD is issued each month and each holds ten games, then the centrally-generated menu signal can cause the displayed menu to list merely one or two games on the first day, while adding the remainder to the list over the course of the month.

The on-line menu signal also enables the pricing to be changed at any time. Newly-released games would likely carry much higher prices than catalogue games from previously-issued discs, and special offers can be made from time to time. Dynamic market-sensitive pricing can thereby be achieved. Hints and trailers concerning future releases and other information can be carried if desired either by the on-line menu signal or by the monthly magazine or in both. The on-line menu signal may also permit the access means to provide a preview signal upon request by a user to preview a portion of a selected game without charge, preferably for a limited time period.

The user views the displayed game menu and pricing and makes a selection at step 25 by the controls on the video game console. The credit status of the user/subscriber can be checked or re-checked at this point by step 26 if desired. The selection also initiates monitoring and recordal of payment data. Once the game is selected and payment is confirmed, the access means provides a release signal to the game console so that the selected game is downloaded from the compact disc into the game console. The console then generates the digital video signals representative of the game and transmits them to the receiver 12 for display and to permit the game to be played at step 27.

If the credit status of the user/subscriber is unsatisfactory a message explaining this is displayed at step 31.

A timer is preferably provided to limit the duration of game playing. The length of time can be changed from game to game in response to information carried by the menu signal. In Figure 2, the timer is also set at step 27, the game played at 27, and the predetermined time duration for playing indicated at step 28. Continued play would require a fresh payment. The payment may be per game, in which case step 24 is sufficient. Alternatively, the duration of play can be monitored and payment made at step 29 in accordance with the extent or duration of play.

It will therefore be appreciated that the apparatus and method as described in relation to Figures 1 and 2 effectively provides the user/subscriber/game player with the advantages of on-line game availability without the necessity for a broadband communications channel.

The described embodiments are examples only and it will be clear to the person skilled in the art that alternative arrangements may be used.

## Claims

1. Digital information display apparatus comprising display means (12) for displaying decoded information from encoded information held on a local transportable data carrier (11) in response to a release signal provided upon selection by a user from a displayed menu, the menu being received as a menu signal from a remote source through an external communications channel (14) at the start of a session; wherein the encoded digital information on the data carrier cannot be downloaded for display in an intelligible manner without the release signal,
and further comprising a control console (10) adapted to accept the data carrier (11) holding encoded digital information and to selectively download information from said data carrier in response to the release signal; and
conditional access means for connection to said console, to said means for displaying, and to the external communications channel (14);
said conditional access means being adapted to receive the menu signal from said channel said menu signal then permitting the display means to display the menu listing available encoded digital information on a said data carrier currently in the control console and said access means being further adapted then to provide said release signal to the control console upon selection by a user from the displayed menu whereby to permit the display means to display a decoded set of information from the data carrier.

2. Digital information display apparatus according to Claim 1 wherein;
said means for displaying is digital video display means (12) adapted to receive digital information and display an image represented by such digital information; and said access means is further adapted to monitor selected usage.

3. Apparatus according to Claim 2, wherein said control console comprises a video game control console adapted to accept the data carrier in the form of a compact disc holding the software for at least one video game.

4. Apparatus according to Claim 2 or Claim 3, wherein said menu signal permits the display means to display data relating to distinct sets of the encoded digital information together with current pricing data relating to each such distinct set, said pricing data being carried by said menu signal whereby to permit the pricing to be changed from time to time.

5. Apparatus according to Claim 4, wherein said menu signal also carries information controlling selection and presentation for display of the data relating to distinct sets of the encoded digital information, whereby to permit the selection and presentation to be changed from time to time.

6. Apparatus according to anyone of Claims 2 to 5, including a timer adapted to time the duration of display of a selected set of information.

7. Apparatus according to any one of Claims 2 to 6, wherein said access means is further adapted to provide a preview signal upon request by a user to preview a portion of a selected data set, said control console being responsive to said preview signal to selectively download preview information from the data carrier for display by said display means.

8. Apparatus according to anyone of Claims 2 to 7, wherein said access means is adapted to store current credit information relating to the credit status of the user, said access means being disabled from providing said release signal in the event said stored current credit information does not meet predetermined criteria.

9. Apparatus according to any one of Claims 2 to 8, wherein said digital video display means comprises a digital TV receiver.

10. A method of controlling the decoding and display of information, **characterised in that** the information is held in encoded form on a local transportable data carrier accepted in a control console (10) and is released for decoded display in response to a release signal provided by a conditional access means upon selection by a user from a displayed menu, and wherein the encoded digital information on the data carrier cannot be downloaded for display in an intelligible manner without the release signal, the menu being received as a menu signal from a remote source through an external communications channel at the start of a session and then permitting the display of a menu listing available encoded information on the data carrier, said access means then providing said release signal to the control console upon selection by a user from the displayed menu, thereby permitting the display of a decoded set of information from the data carrier.

11. A method according to claim 10, including displaying current pricing data in association with the displayed menu, the current pricing data being carried by said signal from the remote source.

12. A method according to claim 10 or claim 11, including controlling selection and presentation of the displayed menu by control information carried by said signal from the remote source.

13. A method according to any one of claims 10 to 12, including monitoring the selective usage of the displayed decoded data and charging the user a usage fee in response to said monitoring.

## Patentansprüche

1. Vorrichtung zur Anzeige von digitalen Informationen, umfassend Anzeigemittel (12) zum Anzeigen von decodierten Informationen von codierten Informationen, die auf einem lokalen tragbaren Datenträger (11) enthalten sind, als Reaktion auf ein Freigabesignal, das bei Auswahl durch einen Benutzer von einem angezeigten Menü geliefert wird, wobei das Menü als ein Menüsignal von einer entfernten Quelle durch einen externen Übertragungskanal (14) bei Beginn einer Sitzung empfangen wird; und die codierten Digitalinformationen auf dem Datenträger ohne das Freigabesignal nicht in einer allgemein verständlichen Weise zur Anzeige heruntergeladen werden können;
und ferner umfassend eine Steuerkonsole (10), die so ausgelegt ist, dass sie den Datenträger (11), der codierte Digitalinformationen enthält, aufnimmt und Informationen vom Datenträger als Reaktion auf das Freigabesignal selektiv herunterlädt; und
bedingte Zugriffsmittel zur Verbindung mit der Konsole, mit den Mitteln zum Anzeigen und mit dem externen Übertragungskanal (14);
wobei die bedingten Zugriffsmittel so ausgelegt sind, dass sie das Menüsignal vom Kanal empfangen, das Menüsignal dann den Anzeigemitteln ermöglicht, das Menü anzuzeigen, das verfügbare codierte Digitalinformationen auf dem gegenwärtig in der Konsole befindlichen Datenträger auflistet, und die Zugriffsmittel ferner so ausgelegt sind, dass sie das Freigabesignal dann bei Auswahl durch einen Benutzer vom angezeigten Menü an die Konsole liefert, um **dadurch** den Anzeigemitteln zu ermöglichen, einen decodierten Satz von Informationen vom Datenträger anzuzeigen.

2. Vorrichtung zur Anzeige von digitalen Informationen nach Anspruch 1, wobei:
das Mittel zum Anzeigen ein Digitalvideoanzeigemittel (12) ist, das so ausgelegt ist, dass es digitale Informationen empfängt und ein Bild anzeigt, das durch solche digitalen Informationen dargestellt wird; und das Zugriffsmittel ferner so ausgelegt ist, dass es die ausgewählte Benutzung überwacht.

3. Vorrichtung nach Anspruch 2, wobei die Steuerkonsole eine Videospielsteuerkonsole umfasst, die so ausgelegt ist, dass sie den Datenträger in Form einer Compact Disc, der die Software für wenigstens ein Videospiel enthält, aufnimmt.

4. Vorrichtung nach Anspruch 2 oder 3, wobei das Menüsignal den Anzeigemitteln ermöglicht, Daten in Bezug auf unterschiedliche Sätze der codierten Digitalinformationen zusammen mit aktuellen Preisangabedaten in Bezug auf jeden solchen unterschiedlichen Satz anzuzeigen, und die Preisangabedaten durch das Menüsignal transportiert werden, um **dadurch** zu ermöglichen, dass die Preisangabe von Zeit zu Zeit geändert wird.

5. Vorrichtung nach Anspruch 4, wobei das Menüsignal außerdem Informationen transportiert, die die Auswahl und Darstellung zur Anzeige der Daten in Bezug auf die unterschiedlichen Sätze der codierten Digitalinformationen steuern, um **dadurch** zu ermöglichen, dass die Auswahl und die Darstellung von Zeit zu Zeit geändert werden.

6. Vorrichtung nach einem der Ansprüche 2 bis 5, umfassend einen Zeitgeber, der so ausgelegt ist, dass er die Dauer der Anzeige eines ausgewählten Satzes von Informationen zeitlich steuert.

7. Vorrichtung nach einem der Ansprüche 2 bis 6, wobei das Zugriffsmittel ferner so ausgelegt ist, dass es auf Antrag durch einen Benutzer auf Vorschau eines Teils eines ausgewählten Datensatzes ein Vorschausignal liefert, und die Steuerkonsole auf das Vorschausignal anspricht, um Vorschauinformationen vom Datenträger zur Anzeige durch die Anzeigemittel selektiv herunterzuladen.

8. Vorrichtung nach einem der Ansprüche 2 bis 7, wobei das Zugriffsmittel so ausgelegt ist, dass es aktuelle Kreditinformationen in Bezug auf den Kreditstatus des Benutzers speichert, und das Zugriffsmittel daran gehindert wird, das Freigabesignal zu liefern, falls die gespeicherten aktuellen Kreditinformationen vorbestimmte Kriterien nicht erfüllen.

9. Vorrichtung nach einem der Ansprüche 2 bis 8, wobei das Digitalvideoanzeigemittel einen digitalen TV-Empfänger umfasst.

10. Verfahren zur Steuerung des Decodierens und Anzeigens von Informationen, **dadurch gekennzeichnet, dass** die Informationen in codierter Form auf einem lokalen tragbaren Datenträger, der in einer Steuerkonsole (10) aufgenommen wird, enthalten sind und als Reaktion auf ein Freigabesignal, das durch ein bedingtes Zugriffsmittel bei Auswahl durch einen Benutzer von einem angezeigten Menü geliefert wird, zur decodierten Anzeige freigegeben werden, und wobei die codierten Digitalinformationen auf dem Datenträger ohne das Freigabesignal nicht in einer allgemein verständlichen Weise zur Anzeige heruntergeladen werden können, das Menü als ein Menüsignal von einer entfernten Quelle durch einen externen Übertragungskanal bei Beginn einer Sitzung empfangen wird und dann die Anzeige eines Menüs ermöglicht, das verfügbare codierte Informationen auf dem Datenträger auflistet, und die Zugriffsmittel das Freigabesignal dann bei Auswahl durch einen Benutzer vom angezeigten Menü an die Konsole liefert, um **dadurch** die Anzeige eines decodierten Satzes von Informationen vom Datenträger zu ermöglichen.

11. Verfahren nach Anspruch 10, umfassend ein Anzeigen von aktuellen Preisangabedaten in Verbindung mit dem angezeigten Menü, wobei die aktuellen Preisangabedaten durch das Signal von der entfernten Quelle transportiert werden.

12. Verfahren nach Anspruch 10 oder 11, umfassend ein Steuern der Auswahl und Darstellung des angezeigten Menüs durch Steuerinformationen, die durch das Signal von der entfernten Quelle transportiert werden.

13. Verfahren nach einem der Ansprüche 10 bis 12, umfassend ein Überwachen der selektiven Benutzung der angezeigten decodierten Daten und ein Verrechnen einer Benutzungsgebühr dem Benutzer als Reaktion auf die Überwachung.

## Revendications

1. Appareil d'affichage d'informations numériques comprenant des moyens d'affichage (12) destinés à afficher des informations décodées à partir d'informations codées contenues dans un support de données local pouvant être transporté (11) en réponse à un signal de libération fourni lors d'une sélection par un utilisateur à partir d'un menu affiché, le menu étant reçu comme un signal de menu en provenance d'une source distante par l'intermédiaire d'un canal de communications extérieur (14) au début de la session ;
dans lequel les informations numériques codées dans le support de données ne peuvent pas être téléchargées pour un affichage d'une façon intelligible sans le signal de libération,
et comprenant en outre une console de commande (10) apte à recevoir le support de données (11) qui contient des informations numériques codées et à télécharger de manière sélective des information à partir dudit support de données en réponse au signal de libération ; et
des moyens d'accès conditionnel pour une connexion à ladite console, auxdits moyens d'affichage, et au canal de communications extérieur (14) ;
lesdits moyens d'accès conditionnel étant aptes à recevoir le signal de menu en provenance dudit canal, ledit signal de menu permettant alors aux moyens d'affichage d'afficher le menu qui énumère les informations numériques codées disponibles sur un dit support de données actuellement dans la console de commande, et lesdits moyens d'accès étant en outre aptes à fournir ledit signal de libération à la console de commande lors d'une sélection par un utilisateur à partir du menu affiché, de manière à permettre de ce fait aux moyens d'affichage d'afficher un ensemble d'informations décodées en provenance du support de données.

2. Appareil d'affichage d'informations numériques selon la revendication 1,
dans lequel :
lesdits moyens d'affichage sont des moyens d'affichage de vidéo numérique (12) aptes à recevoir des informations numériques et à afficher une image représentée par de telles informations numériques ;
et lesdits moyens d'accès sont en outre aptes à surveiller l'utilisation sélectionnée.

3. Appareil selon la revendication 2, dans lequel ladite console de commande comprend une console de commande de jeu vidéo apte à recevoir le support de données sous la forme d'un disque compact qui contient le logiciel d'au moins un jeu vidéo.

4. Appareil selon la revendication 2 ou la revendication 3, dans lequel ledit signal de menu permet aux moyens d'affichage d'afficher des données qui concernent des ensembles distincts d'informations numériques codées ainsi que des données de prix actuels qui concernent chaque ensemble distinct, lesdites données de prix étant portées par ledit signal de menu de manière à permettre de ce fait de modifier les prix d'un instant à l'autre.

5. Appareil selon la revendication 4, dans lequel ledit signal de menu porte également des informations qui commandent la sélection et la présentation de l'affichage des données qui concernent des ensembles distincts d'informations numériques codées, de manière à permettre de ce fait de modifier la sélection et la présentation d'un instant à l'autre.

6. Appareil selon l'une quelconque des revendications 2 à 5, comprenant un temporisateur apte à chronométrer la durée de l'affichage d'un ensemble d'informations sélectionné.

7. Appareil selon l'une quelconque des revendications 2 à 6, dans lequel lesdits moyens d'accès sont en outre aptes à fournir un signal de prévisualisation à la demande d'un utilisateur, de manière à prévisualiser une partie d'un ensemble de données sélectionné, ladite console de commande étant sensible audit signal de prévisualisation de façon à télécharger de manière sélective des informations de prévisualisation en provenance du support de données pour un affichage par lesdits moyens d'affichage.

8. Appareil selon l'une quelconque des revendications 2 à 7, dans lequel lesdits moyens d'accès sont aptes à stocker des informations de crédit en cours qui concernent l'état de crédit de l'utilisateur, lesdits moyens d'accès étant empêchés de fournir ledit signal de libération dans le cas où lesdites informations de crédit en cours stockées ne répondent pas à des critères prédéterminés.

9. Appareil selon l'une quelconque des revendications 2 à 8, dans lequel lesdits moyens d'affichage de vidéo numérique comprennent un récepteur de TV numérique.

10. Procédé de contrôle du décodage et de l'affichage d'informations, **caractérisé en ce que** les informations sont contenues sous une forme codée dans un support local d'informations pouvant être transporté, reçu dans une console de commande (10), et sont libérées pour un affichage décodé en réponse à un signal de libération fourni par des moyens d'accès conditionnel lors d'une sélection par un utilisateur à partir d'un menu affiché, et dans lequel les informations numériques codées présentes sur le support de données ne peuvent pas être téléchargées pour un affichage d'une façon intelligible sans un signal de libération, le menu étant reçu comme un signal de menu en provenance d'une source distante par l'intermédiaire d'un canal de communication extérieur au début d'une session, et permettant ensuite l'affichage d'un menu qui énumère les informations codées disponibles sur le support de données, lesdits moyens d'accès fournissant ensuite ledit signal de libération à la console de commande lors d'une sélection par un utilisateur à partir du menu affiché, en permettant de ce fait l'affichage d'un ensemble d'informations décodées en provenance du support de données.

11. Procédé selon la revendication 10, comprenant l'affichage de données de prix actuels en association avec le menu affiché, les données de prix actuels étant portées par ledit signal en provenance de la source distante.

12. Procédé selon la revendication 10 ou la revendication 11, comprenant la commande de la sélection et de la présentation du menu affiché par des informations de commande portées par ledit signal en provenance de la source distante.

13. Procédé selon l'une quelconque des revendications 10 à 12, comprenant la surveillance de l'utilisation sélective des données décodées affichées et l'imputation à l'utilisateur de frais d'utilisation en réponse à ladite surveillance.
